# NEW EUROPEAN PATENT SPECIFICATION

(11) **EP 2 140 728 B2**
(45) Date of publication and mention of the opposition decision: **18.06.2014**
(45) Mention of the grant of the patent: 31.08.2011
(21) Application number: 08747064.7
(22) Date of filing: 28.04.2008
(51) Int. Cl.: H05B 3/84, H01R 4/38, B60J 1/18, B29C 45/14

(54) **MECHANICAL ATTACHMENT OF ELECTRICAL TERMINALS TO PLASTIC GLAZINGS**
MECHANISCHE BEFESTIGUNG ELEKTRISCHER ANSCHLÜSSE AN KUNSTSTOFFFENSTERN
FIXATION MÉCANIQUE DE BORNES ÉLECTRIQUES À DES VITRAGES EN PLASTIQUE

(30) Priority: 26.04.2007 US 914187 P
(43) Date of publication of application: 06.01.2010
(73) Proprietor: Exatec, LLC., Wixom, MI 48393 (US)
(72) Inventor: SARGENT, Jonathan, Toronto, Ontario M4Y 1G6 (CA); VAN DER MEULEN, Wixom, Mi 48393 (US); SCHWENKE, Robert, A., Austin, TX 78741 (US); BEAUDOIN, Jason, Livonia, MI 48152 (US); VELASQUEZ, Juan, Clarkston, Michigan 48438 (US)
(74) Representative: Solf, Alexander
(86) International application number: PCT/US2008/061826
(87) International publication number: WO 2008/134669

(56) References cited:
- EP-A- 0 634 882
- EP-A1- 0 040 942
- EP-A2- 0 634 882
- DE-A1- 10 016 346
- DE-A1- 10 016 346
- DE-A1- 10 308 283
- DE-B3-102004 018 109
- GB-A- 1 333 049
- GB-A- 1 333 049
- GB-A- 2 381 670
- US-A- 3 798 419
- US-A- 3 798 419
- US-A- 4 883 940
- US-A- 4 883 940
- US-A- 4 997 396
- US-A- 4 997 396
- US-A1- 2006 234 523
- US-B1- 7 115 000

## Description

### Background of the Invention

### 1. Field of the Invention

The present invention generally relates to the connection of electrical terminals to plastic panels having electrically conductive grids thereon. More specifically, the present invention relates to the attachment of electrical terminals to an electrical circuit applied to a plastic substrate in a plastic window system in order to provide such things as defrosting and defogging capabilities to the window system. 2. Description of the Related Technology

Electrically heatable grids have long been used for the defrosting and defogging of windows, particularly backlights of automobiles. Various types of electrically heated windows have been devised and typically include an electrically conductive heating grid located on either the interior or exterior side of the window. The heating grid typically includes a pair of opposed busbars, between which a series of grid lines extend. During the passing of electric current through the heating grid, the resistance of the grid lines results in the generation of heat. This heat dissipates across the window, subsequently defrosting or defogging of the window. In order to provide electricity to the heating grid, the heating grid is coupled to the electrical system of the automotive vehicle.

To achieve this coupling of the automotive vehicle's electrical system to the heating grid, the busbars of the heating grid have been provided with foil tabs that extend beyond the edges of the window. Terminals of a wire harness terminal, from the vehicle's electrical system, engage the tabs. The terminals are of a variety of constructions, but often include a spring metal contact, encased within a housing. When the housing is attached to a tab, the contact is biased against and into contact with the busbar.

In an alternate construction, bonding pads are integrally formed with the busbars and the terminals from the vehicle's electrical system are soldered directly to the bonding pads.

Each of the above constructions has its known problems and limitations. Illustrative of the limitations of the spring contacts, over the life of the vehicle, the spring contacts may become loose due to fatigue and/or vibration, resulting in a non-working or a poorly working heating grid. With regard to the limitations of a pad bonding construction, the application of too much or too little solder weakens the joint between the terminals and the bonding pad, which may result in the terminal being easily dislodged from the bonding pad itself. Due to the low T_{g} of plastics, traditional high temperature solder cannot be used to make robust connections to the busbars 18, 29. The soldering temperatures of such solders are too high and result in damage to the plastic of the panel 14. Unfortunately, the commercially available low temperature solders, and even, electrically conductive adhesives, have unacceptable bonding strengths and or reliability. Connecting with such materials results in the terminals being bonded to the busbar and requiring only 5 or 6 pounds of force (push/pull), applied parallel to the surface of the panel, to remove the terminal. Typically, original equipment manufacturers (OEM) require the connection to withstand forces of greater than 27 pounds before removal.

US 4,100,398 discloses a laminated electrically heated window in which a portion of each busbar extends beyond the edge of the window so as to make a connection with a wiring cable harness from the vehicle. The busbar includes on its ends separate electrical contacts for forming pin and socket connections with the cable harness.

US 4,246,467 discloses a heatable window in which a terminal that is soldered to the busbar.

US 5,897,406 discloses a terminal for an electrically heated glass sheet. The terminal includes a post that projects upwardly from a base that is soldered to the conductive pad on the glass sheet.

DE 100 16 346 A1 discloses a plastic window system with a plastic panel and an electrically conductive grid. An electrical terminal is connected to the panel via selfcutting screws whereby the electrical connection of the terminal with the grid is conducted by a conductive tape.

In view of the above, it is apparent that improved connection constructions for attaching terminals to the busbars of heating grids on plastic window systems are required.

### Summary

In overcoming the drawbacks and limitations of the known technology, the present invention provides a plastic window system according to claim 1 including a transparent plastic panel and an electrically conductive grid provided on the plastic panel. The conductive grid includes at least one busbar and an electrical terminal is electrically connected to the busbar. Securing the terminal to the busbar is a connector. The connector includes a portion extending from the panel to a location outboard, relative to the panel, of the busbar.

In another aspect of the present invention, the conductive grid is one of an antenna, an electroluminescent border, and a heating grid.

In a further aspect of the invention, the connector is a compressive edge clip, the edge clip including one end received within the panel and an opposing end biasing the terminal into engagement with the busbar.

In an additional aspect of the invention, the opposing end of the edge clip compresses the terminal between the opposing end of the edge clip and the busbar.

An additional aspect of the invention includes the edge clip being retained on the panel by a bonding agent.

In another aspect of the invention the bonding agent is located between the one end of edge clip and the panel.

In a further aspect of the invention the opposing end of the edge clip is received within a bore defined in an edge of the panel.

In another aspect of the invention the connector is threaded and the terminal is retained in engagement with the connector by a nut threadably received on the connector.

In an additional aspect of the invention, the connector completely extends through the thickness of the panel

In a further aspect of the invention, the connector extends less than completely through the thickness of the panel.

In another aspect of the invention the connector is conductive.

In a further aspect of the invention the connector includes an internally threaded boss secured to the panel and a bolt threadably engaged therewith.

In an additional aspect of the invention the connector is mounted to the surface of the panel and includes a post extending through the busbar outward from the panel, the terminal being received on the post.

In another aspect of the invention the connector is non-conductive.

In a further aspect of the invention the connector includes a compression nut received on the post, the compression nut biases the terminal into engagement with the busbar.

In an additional aspect of the invention the connector is conductive.

In another aspect of the invention the post is threaded.

In a further aspect of the invention the terminal is received within a bore defined within a side edge of the panel and the connector extends into the panel laterally relative to the bore defined in the side edge and the terminal.

In an additional aspect of the invention the conductive grid is a heater grid integrally formed with the plastic panel, the heater grid having a plurality of grid lines formed of a conductive material, whereby the plurality of grid lines heat via resistive heating when an electrical current from a power supply travels through each of the plurality of grid lines.

### Brief Description of the Drawings

Figure 1 is a schematic view of a window assembly embodying the principles of the present invention;

Figure 2 is a partial cross sectional view of one embodiment of the invention;

Figure 3 is a partial cross sectional view of another embodiment of the invention;

Figure 4 is a partial cross sectional view of a further embodiment of the invention;

Figure 5 is a partial cross sectional view of one embodiment of the invention;

Figure 6 is a partial cross sectional view of another embodiment of the invention;

Figure 7 is a partial cross sectional view of a further embodiment of the invention; and

Figure 8 is a partial cross sectional view of an additional embodiment of the invention.

### Detailed Description

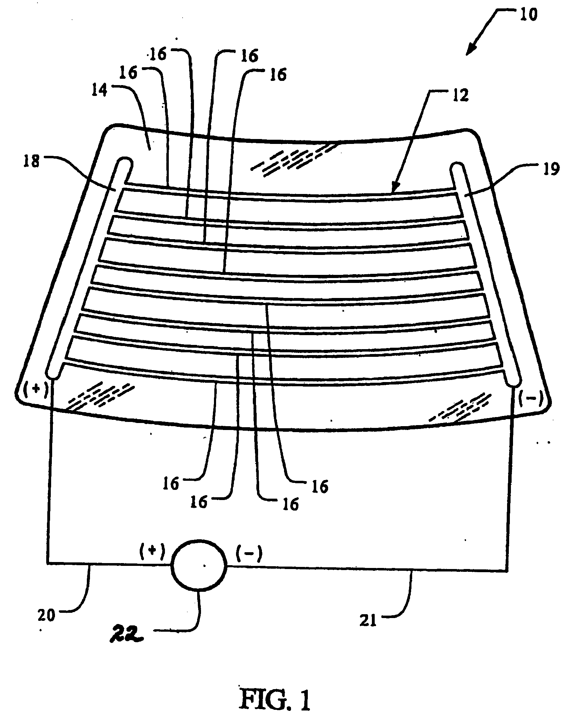

Referring now to Figure 1, a plastic window system 10 is generally illustrated therein and includes, as its primary components, an electrically conductive heating grid 12 provided on a panel 14.

The panel 14 is a transparent plastic panel, preferably made of a thermoplastic resin over which one or more weathering and abrasion resistant layers are applied. The weathering and abrasion resistant layers may be applied over the heating grid 12 or applied to the panel 14 prior to application of the heating grid 12.

The panel 14 itself may be formed through the use of any technique known to those skilled in the art, such as molding, which includes injection molding, blow molding, and compression molding and/or thermoforming, the latter including thermal forming, vacuum forming, and cold forming. Although not necessary, the aforementioned techniques may be used in combination with each other, such as thermoforming a first layer of the panel into the shape of a surface of the mold prior to injection molding of another layer onto and integrally bonding with the first layer, thereby, forming a multilayered panel 14 of the desired shape.

The panel 14 may be formed from a variety of plastic resins, including but not limited to, polycarbonate, acrylic, polyarylate, polyester and polysulfone resins, as well as copolymers and mixtures thereof, as well as being copolymerized or blended with other polymers such as PBT, ABS, or polyethylene. The panel 14 may further be comprised of various additives, such as colorants, mold release agents, antioxidants, and ultraviolet absorbers (UVA), among others.

The weathering layer preferably comprises either a polyurethane coating or a combination of an acrylic primer and a silicone hard-coat. Alternatively, other coating systems may be used.

In one preferred embodiment, the primer in the weathering layer is a waterborne acrylic primer comprising water as a first co-solvent and an organic liquid as a second co-solvent. The general chemical classes associated with the second co-solvent present in the primer/hard-coat system include glycol ethers, ketones, alcohols and acetates. The acrylic resin may be present as a water soluble, dispersible, or reducible resin. The primer may contain other additives, such as, but not limited to, surfactants, antioxidants, biocides, ultraviolet absorbers (UVAs), and drying agents, among others. An example of such an acrylic primer includes Exatec® SHP 9X, which is commercially available from Exatec, LLC (Wixom, MI) and distributed by General Electric Silicones (Waterford. NY).

By way of example, the resin in the silicone hard-coat is preferably a methylsilsequioxane resin dispersed in a mixture of alcohol solvents. The silicone hard-coat may also comprise other additives, such as but not limited to surfactants, antioxidants, biocides, ultraviolet absorbers, and drying agents, among others. A preferred silicone hard-coat is also available from Exatec, LLC and distributed by General Electric Silicones as Exatec® SHX.

The weathering layer may be applied to the transparent plastic panel by dipping the panel in the coating at room temperature and atmospheric pressure through a process known to those skilled in the art as dip coating. Alternatively, the weathering layer may be applied by flow coating, curtain coating, spray coating, or other processes known to those skilled in the art.

A substantially inorganic coating that adds additional or enhanced functionality to the automotive decorative glazing assembly, such as improved abrasion resistance, is applied on top of the weathering layer. Specific examples of possible inorganic coatings comprising the abrasion resistant layer include, but are not limited to, aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, silicon carbide, hydrogenated silicon oxy-carbide, tantalum oxide, titanium oxide, tin oxide, indium tin oxide, yttrium oxide, zinc oxide, zinc selenide, zinc sulfide, zirconium oxide, zirconium titanate, or glass, and mixtures or blends thereof.

The abrasion resistant layer may be applied by any technique known to those skilled in the art. These techniques include deposition from reactive species, such as those employed in vacuum-assisted deposition processes, and atmospheric coating processes, such as those used to apply sol-gel coatings to substrates. Examples of vacuum-assisted deposition processes include, but are not limited to, plasma enhanced chemical vapor deposition (PECVD), arc-PECVD, ion assisted plasma deposition, magnetron sputtering, electron beam evaporation, and ion beam sputtering. Examples of atmospheric coating processes include, but are not limited to, curtain coating, spray coating, spin coating, dip coating, and flow coating.

The heating grid 12 preferably includes a series of grid lines 16 extending between generally opposed busbars 18, 19, although other constructions of heating grids may be employed. The grid lines 16 may of equal or differing widths or thicknesses. Furthermore, at least some of the grid lines 16 may be replaced by a conductive film or coating extending between the remaining grid lines 16.

The busbars 18, 19 are designated as positive and negative busbars and are respectively connected to positive and negative leads 20, 21 of a power supply 22. The power supply 22 may be the electrical system of an automotive vehicle. Upon the application of a voltage to the heating grid 12, electric current will flow through the grid lines 16 from the positive busbar 18 to the negative busbar 19 and, as a result, the grid lines 16 will heat up via resistive heating. The widths and lengths of the bus bars 18, 19 and grid lines 16 may be of any suitable dimension and will, in part, be determined by the size and other characteristics of the window system 10.

In applying the heating grid 12 to the panel 14, the heating grid 12 may be applied by any of the methods known now or in the future to those skilled in the art. Such methods include, without limitation, printing the heating grid 12 on the panel 14 or printing the heating grid 12 on a plastic film that is subsequently applied to the panel 14 by film insert molding or in mold decorating techniques.

Various mechanical systems are provided herein to connect a terminal to the bus bar or terminal pad of an electrical circuit.

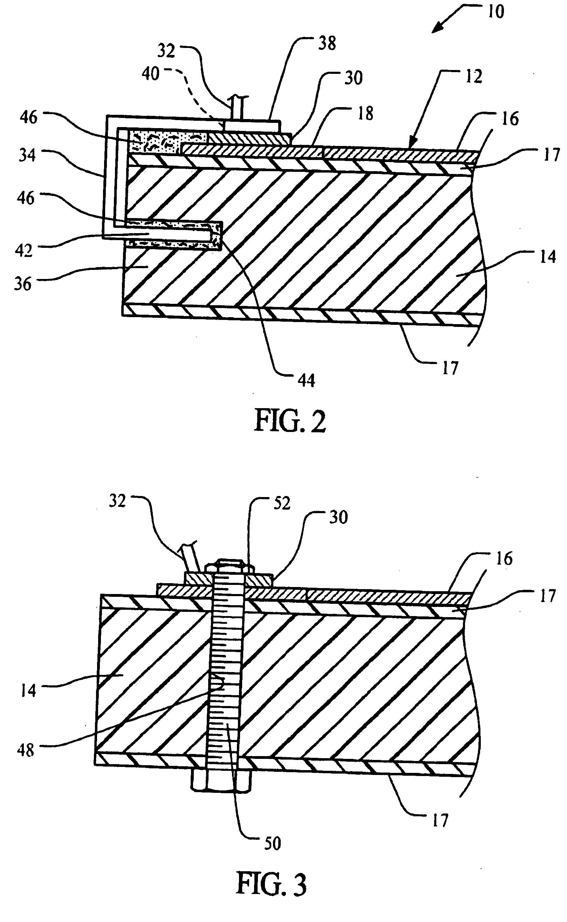

In a first embodiment of the invention, as seen in Figure 2, the heating grid 12 (busbars 18, 19 and grid lines 16) is applied to the panel 14 over top one or both of the weathering and abrasion resistant layers, generically designated as 17. For the sake of clarity, only one busbar 18 of the pair of busbars 18, 19 is further illustrated, it being understood that this connection, and those that follow, is applicable to both of the busbars 18. 19 of the heating grid 12. A terminal 30, and connected wire 32, are provided on and in electrical contact with the busbar 18. To secure the terminal 30 to the busbar 18. a compressive edge clip 34 is provided over an end or edge 36 of the panel 14. The edge clip 34 is preferably made of spring steel and biases the terminal 30 into engagement with the busbar 18. Alternatively the edge clip 34 may be made of any material, including plastic, that will enable the edge clip 34 to provide the necessary biasing force. One end, a terminal end 38, of the edge clip 34 overlies the terminal 30 and secures the terminal 30 to the busbar 18. A slot or bore 40 may be provided in the end 38 so as to allow the wire 32 to pass through the end 38 of the clip 34. The opposing end 42 of the edge clip 34 is preferably inserted into a bore or hole 44 provided in the edge 36 of the panel 14. This bore 44 may be molded into the edge 36 during forming of the panel 14 or may be drilled into the edge 42 during a post molding operation. While the edge clip 34 may in and of itself exhibit a sufficient biasing force so as to retain the contact 30 on the busbar 18, it is preferred that the edge clip 34 is bonded to the panel 14 using a bonding agent 46, such as an epoxy or other adhesive. The bonding agent 46 is preferably located between the edge clip 34 and the side of the panel 14 on which the heating grid 12 is located. Additionally, the adhesive is also provided in the bore 44 so as to retain the other end 42 of the edge clip 34 therein.

A second embodiment of the invention is illustrated in Figure 3. As in the prior embodiment, the heating grid 12 is applied to the panel 14 over top one or both of the weathering and abrasion resistant layers, again generically designated as 17. In order to secure the terminal 30 and wire to the heating grid 14, this embodiment provides for the drilling of a bore 48 through the width of the panel 14, including through the busbar 18 itself. The terminal 30 is provided on top of the busbar 18 and a threaded bolt 50 extended through the bore 48 and through an opening in the terminal 30. As such the terminal 30 is preferably a ring-type terminal, although a forked terminal could also be used. A nut 52 is threadably engaged onto the bolt 50 so as to retain the terminal 30 between the nut 52 and the busbar 18. To eliminate visual objections to the terminal 30, nut 52 and end of the bolt 50, a cap (not shown) may be used over the end of the bolt 50 and nut 52. Since the terminal 30 is in direct contact with the busbar 18, the bolt 50 does not have to be constructed of a conductive material.

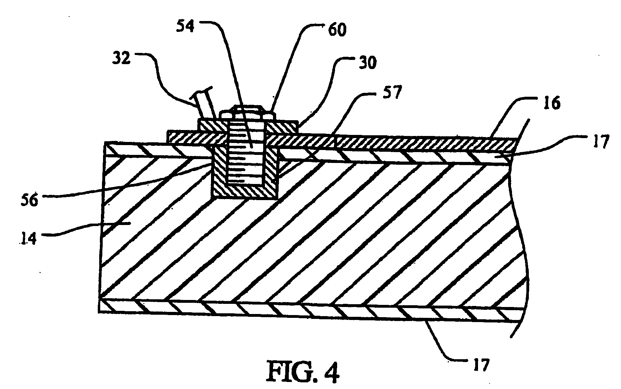

A third embodiment is illustrated in Figure 4. In this embodiment, a threaded shaft 54 is embedded into one side of the panel 14. In order to embed the shaft into the panel 14, a bore 56 is provided, either molded during forming of the panel 14 or drilled post production of the panel 14, in one side of the panel 14. The shaft 54 is then inserted into the bore 56 and retained via a bonding agent 57, such as an epoxy or other adhesive. Like the embodiment of Figure 3, the terminal 30 is provided on top of the busbar 18, with the end of the shaft 54 extending through an opening or slot in the terminal 30. Again, the terminal 30 in such an instance is preferably a ring-type terminal, although a forked terminal could also be used. Onto the shaft 54, a nut 60 is threadably engaged so as to retain the terminal 30 between the nut 60 and the busbar 18. For aesthetic reasons, the terminal 30, nut 60 and end of the shaft 54 may be covered by a cap (not shown). Since the terminal 30 is in direct contact with the busbar 18, the shaft 54 does not have to be constructed of a conductive material.

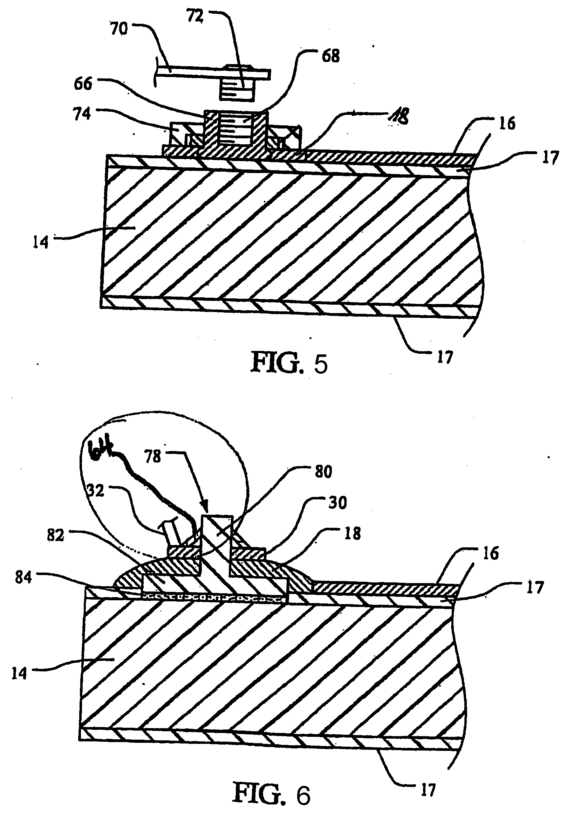

As shown in Figure 5, an additional embodiment of the invention includes providing boss 66 on top of the weathering and abrasion resistant layers 17. The boss 66 is provided with internal threads 68 and the busbar 18 provided about and in electrical contact with the boss 66. The terminal 70 is of a different construction than that seen in the other embodiments and includes an integrally formed threaded bolt 72. The bolt 72 engages with the boss 66, which is formed of an electrically conductive material, such that the electrical connection of the terminal 70 with the busbar 18 is made via the boss 66 and bolt 72. If desired a cap 74 may be provided over portions of the attachment constructions for enhanced aesthetics.

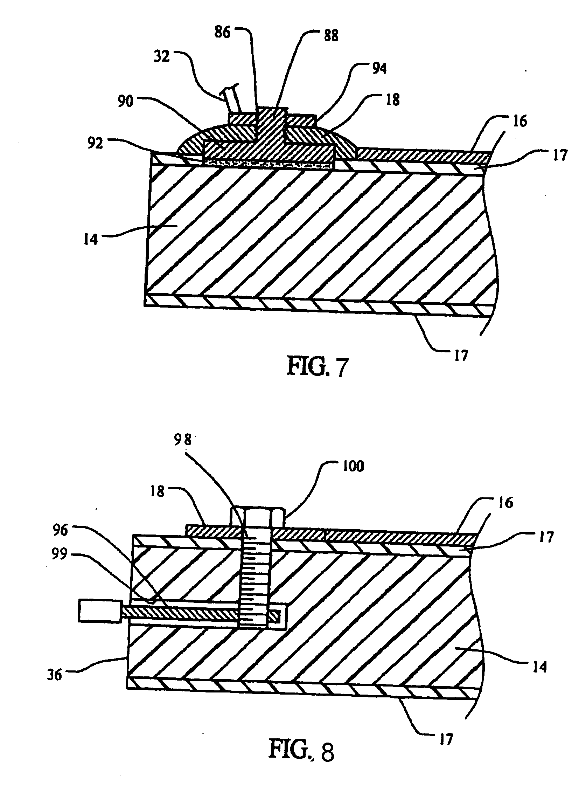

Two additional embodiments are illustrated in figures 6 and 7. In each of these embodiments, connector is mounted to the panel 14 prior to the application of the weathering and abrasion resistant layers 17 and the busbar 18 is printed over top of a portion of the connector.

In Figure 6, the connector 78 is constructed of a non-electrically conductive material and includes a cylindrical post 80 extending from an enlarged, generally flat base 82; the base 82 being secured to the panel 14 with a bonding agent 84. Provided over the post and in contact with the busbar 18 is the terminal 30. A compression nut 64 is engaged with the post 80 so as to force and maintain the terminal 30 in contact with the busbar 18.

In Figure 7, the connector 86 is constructed of an electrically conductive material and also includes a threaded post 88 extending from an enlarged, generally flat base 90; the base 90 being secured to the panel 14 with a bonding agent 92. The terminal 94 is provided over the post 88 in direct contact with the busbar 18. The terminal 94 itself may be provided with threads so as to engage directly with the post 88 or, alternatively the terminal 94 may be retained with a threaded nut (not shown) engaged with the post, as generally described in various ones of the prior embodiments.

The final illustrated embodiment of the invention is shown in Figure 8. In this embodiment, a bore 99 is formed into the side edge 36 of the panel 14. Into this bore 99 is extended the terminal 96. A second bore 98, transverse to the edge bore 99, is also provided in the panel 14 and is located so as to pass through the busbar 18 and to intersect with the edge bore 99. A screw or bolt 100 is extended through the transverse bore 98 such that it engages and retains the terminal 96. The bolt 100 may pass through an opening in the end of the terminal 96 or it may compressively engage the end of the terminal 96 between end of the bolt 100 and the sidewall of the edge bore 99. In that the bolt 100 is formed of a conductive material, the terminal will be electrically connected to the bus bar 18 and the heating grid 12.

The preceding description of the preferred embodiment is merely exemplary in nature and is in no way intended to limit the invention or its application or uses. A person skilled in the art will recognize from the previous description that modifications and changes can be made to the preferred embodiment of the invention without departing from the scope of the invention as defined in the following claims.

## Claims

1. A plastic window system comprising:
a transparent plastic panel;
an electrically conductive grid provided on the plastic panel, the conductive grid including at least one busbar;
an electrical terminal being electrically connected to the busbar; and
a connector, the connector securing the terminal to the busbar, the connector including a portion extending from the panel to a location outboard of the busbar relative to the panel, the connector being one selected from the group of: a) the connector being a compressive edge clip, the edge clip including one end received within the panel and an opposing end biasing the terminal into engagement with the busbar; b) the connector being threaded and the terminal being retained in engagement with the connector by a nut threadably received on the connector and the connector being inserted into and retained via a bonding agent in a bore in one side of the panel or being extended through a bore in the panel, c) the connector including an internally threaded boss secured to the panel and a bolt threadably engaged therewith, d) the connector being mounted to the surface of the panel and including a post extending through the busbar outward from the panel, the terminal being received on the post and either the connector being constructed of a non-electrically conductive material and the post being cylindrical and extending from an enlarged, generally flat base being secured to the panel with a bonding agent or the connector being constructed of an electrically conductive material and also including a threaded post extending from an enlarged,
generally flat base being secured to the panel with a bonding agent; and e) the terminal being received within a bore defined within a side edge of the panel and the connector extending into the panel laterally relative to the bore defined in the side edge and the terminal.

2. The plastic window system of Claim 1 wherein the conductive grid is one of an antenna, an electroluminescent border, and a heating grid.

3. The plastic window system of Claim 1 wherein the opposing end of the edge clip compresses the terminal between the opposing end of the edge clip and the busbar.

4. The plastic window system of Claim 1 wherein the edge clip is further retained on the panel by a bonding agent.

5. The plastic window system of Claim 4 wherein the bonding agent is located between the one end of edge clip and the panel.

6. The plastic window system of Claim 1 wherein the opposing end of the edge clip is received within a bore defined in an edge of the panel.

7. The plastic window system of Claim 1 wherein the connector of embodiment (b) completely extends through the thickness of the panel.

8. The plastic window system of Claim 1 wherein the connector of embodiment (b), (c), (d) or (e) extends less than completely through the thickness of the panel.

9. The plastic window system of Claim 1 wherein the connector of embodiment (d) is non-conductive.

10. The plastic window system of Claim 9 wherein the connector includes a compression nut received on the post, the compression nut biases the terminal into engagement with the busbar.

11. The plastic window system of Claim 1 wherein the connector is conductive.

12. The plastic window system of Claim 11 wherein the post of embodiment (d) is threaded.

13. The plastic window system of Claim 1 wherein the conductive grid is a heater grid integrally formed with the plastic panel, the heater grid having a plurality of grid lines formed of a conductive material, whereby the plurality of grid lines heat via resistive heating when an electrical current from a power supply travels through each of the plurality of grid lines.

## Patentansprüche

1. Kunststofffenstersystem, umfassend:
eine durchsichtige Kunststoffscheibe;
ein elektrisch leitendes Gitter, das auf der Kunststoffscheibe vorgesehen ist, wobei das leitende Gitter mindestens eine Sammelschiene enthält;
einen elektrischen Anschluss, der mit der Sammelschiene elektrisch verbunden ist; und
einen Verbinder, wobei der Verbinder den Anschluss an der Sammelschiene befestigt, wobei der Verbinder einen Teil enthält, der sich von der Scheibe zu einer Stelle erstreckt, die sich bezüglich der Scheibe außerhalb der Sammelschiene befindet, wobei der Verbinder aus einer aus Folgendem bestehenden Gruppe ausgewählt ist: a) dem Verbinder, bei dem es sich um eine komprimierbare Randklemme handelt, wobei die Randklemme ein Ende, das in der Scheibe aufgenommen wird, und ein gegenüberliegendes Ende, das den Anschluss in Eingriff mit der Sammelschiene vorspannt, enthält; b) dem Verbinder, der ein Gewinde aufweist, wobei der Anschluss durch eine Mutter, die auf den Verbinder durch Aufschrauben aufgenommen wird, in Eingriff mit dem Verbinder festgehalten wird und wobei der Verbinder in eine Bohrung in einer Seite der Scheibe eingesetzt ist und durch ein Bindemittel darin festgehalten wird oder sich durch eine Bohrung in der Scheibe erstreckt; c) dem Verbinder, der einen ein Innengewinde aufweisenden Ansatz, der an der Scheibe befestigt ist, und eine damit in Gewindeeingriff stehende Schraube enthält; d) dem Verbinder, der an der Fläche der Scheibe angebracht ist und einen sich durch die Sammelschiene von der Scheibe nach außen erstreckenden Zapfen enthält, wobei der Anschluss auf dem Zapfen aufgenommen wird und entweder der Verbinder aus einem nicht elektrisch leitenden Material hergestellt ist und der Zapfen zylindrisch ist und sich von einer vergrößerten, allgemein flachen Basis erstreckt, die mit einem Bindemittel an der Scheibe befestigt ist, oder der Verbinder aus einem elektrisch leitenden Material hergestellt ist und auch einen ein Gewinde aufweisenden Zapfen enthält, der sich von einer vergrößerten, allgemein flachen Basis erstreckt, die mit einem Bindemittel an der Scheibe befestigt ist; und e) dem Anschluss, der in einer in einem Seitenrand der Scheibe definierten Bohrung aufgenommen wird und sich der Verbinder bezüglich der in dem Seitenrand definierten Bohrung und des Anschlusses lateral in die Scheibe erstreckt.

2. Kunststofffenstersystem nach Anspruch 1, wobei das leitende Gitter eine Antenne, eine elektrolumineszierende Grenze oder ein Heizgitter ist.

3. Kunststofffenstersystem nach Anspruch 1, wobei das gegenüberliegende Ende der Randklemme den Anschluss zwischen dem gegenüberliegenden Ende der Randklemme und der Sammelschiene komprimiert.

4. Kunststofffenstersystem nach Anspruch 1, wobei die Randklemme weiterhin durch ein Bindemittel auf der Scheibe festgehalten wird.

5. Kunststofffenstersystem nach Anspruch 4, wobei sich das Bindemittel zwischen dem einen Ende der Randklemme und der Scheibe befindet.

6. Kunststofffenstersystem nach Anspruch 1, wobei das gegenüberliegende Ende der Randklemme in einer in einem Rand der Scheibe definierten Bohrung aufgenommen ist.

7. Kunststofffenstersystem, nach Anspruch 1, wobei sich der Verbinder der Ausführungsform (b) vollständig durch die Dicke der Scheibe erstreckt.

8. Kunststofffenstersystem nach Anspruch 1, wobei sich der Verbinder der Ausführungsform (b), (c), (d) oder (e) nicht vollständig durch die Dicke der Scheibe erstreckt.

9. Kunststofffenstersystem nach Anspruch 1, wobei der Verbinder der Ausführungsform (d) nicht leitend ist.

10. Kunststofffenstersystem nach Anspruch 9, wobei der Verbinder eine Druckmutter enthält, die auf dem Zapfen aufgenommen ist, wobei die Druckmutter den Anschluss in Eingriff mit der Sammelschiene vorspannt.

11. Kunststofffenstersystem nach Anspruch 1, wobei der Verbinder der Ausführungsform (b) leitend ist.

12. Kunststofffenstersystem nach Anspruch 11, wobei der Zapfen ein Gewinde aufweist.

13. Kunststofffenstersystem nach Anspruch 1, wobei das leitende Gitter ein Heizgitter ist, das integral mit der Kunststoffscheibe ausgebildet ist, wobei das Heizgitter mehrere Gitterlinien aufweist, die aus einem leitenden Material hergestellt sind, wodurch sich die mehreren Gitterlinien über Widerstandserwärmung erwärmen, wenn ein elektrischer Strom von einer Energieversorgung durch jede der mehrere Gitterlinien fließt.

## Revendications

1. Système de fenêtre en plastique comprenant :
un panneau en plastique transparent ;
une grille conductrice électriquement prévue sur le panneau en plastique, la grille conductrice comprenant au moins une barre omnibus ;
une borne électrique étant connectée électriquement à la barre omnibus ;
et
un connecteur, le connecteur fixant la borne à la barre omnibus, le connecteur comprenant une partie qui s'étend à partir du panneau jusqu'à un emplacement à l'extérieur de la barre omnibus par rapport au panneau, le connecteur étant sélectionné au sein du groupe comprenant : a) le connecteur étant une pince latérale de serrage, la pince latérale comprenant une extrémité reçue à l'intérieur du panneau et une extrémité opposée contraignant la borne à se mettre en prise avec la barre omnibus ; b) le connecteur étant fileté et la borne étant retenue en prise avec le connecteur par un écrou reçu par vissage sur le connecteur et le connecteur étant inséré dans et retenu par un agent adhésif dans un alésage dans un côté du panneau ou s'étendant à travers un alésage dans le panneau ; c) le connecteur comprenant un mamelon fileté en interne fixé sur le panneau et un boulon mis en prise par vissage avec celui-ci ; d) le connecteur étant monté sur la surface du panneau et comprenant un tenon s'étendant à travers la barre omnibus vers l'extérieur à partir du panneau, la borne étant reçue sur le tenon ou bien le connecteur étant constitué d'un matériau électriquement non conducteur et le tenon étant cylindrique et s'étendant à partir d'une base élargie, généralement plate fixée à un panneau avec un agent adhésif ou le connecteur étant constitué d'un matériau électriquement conducteur et comprenant également un tenon fileté s'étendant à partir d'une base élargie, généralement plate fixée à un panneau avec un agent adhésif ; et e) la borne étant reçue à l'intérieur d'un alésage défini dans un bord latéral du panneau et le connecteur s'étendant dans le panneau latéralement par rapport à l'alésage défini dans le bord latéral et la borne.

2. Système de fenêtre en plastique selon la revendication 1, dans lequel la grille conductrice est un des éléments suivants : une antenne, une bordure électroluminescente et une grille de chauffage.

3. Système de fenêtre en plastique selon la revendication 1, dans lequel l'extrémité opposée de la pince latérale serre la borne entre l'extrémité opposée de la pince latérale et la barre omnibus.

4. Système de fenêtre en plastique selon la revendication 1, dans lequel la pince latérale est en outre retenue sur le panneau par un agent adhésif.

5. Système de fenêtre en plastique selon la revendication 4, dans lequel l'agent adhésif se trouve entre l'extrémité de la pince latérale et le panneau.

6. Système de fenêtre en plastique selon la revendication 1, dans lequel l'extrémité opposée de la pince latérale est reçue à l'intérieur d'un alésage défini dans un bord du panneau.

7. Système de fenêtre en plastique selon la revendication 1, dans lequel le connecteur selon le mode de réalisation (b) s'étend complètement à travers l'épaisseur du panneau.

8. Système de fenêtre en plastique selon la revendication 1, dans lequel le connecteur selon le mode de réalisation (b), (c), (d) ou (e) s'étend moins que complètement à travers l'épaisseur du panneau.

9. Système de fenêtre en plastique selon la revendication 1, dans lequel le connecteur selon le mode de réalisation (d) est non conducteur.

10. Système de fenêtre en plastique selon la revendication 9, dans lequel le connecteur comprend un écrou de serrage reçu sur le tenon, l'écrou de serrage contraignant la borne à se mettre en prise avec la barre omnibus.

11. Système de fenêtre en plastique selon la revendication 1, dans lequel le connecteur est conducteur.

12. Système de fenêtre en plastique selon la revendication 11, dans lequel le tenon selon le mode de réalisation (d) est fileté.

13. Système de fenêtre en plastique selon la revendication 1, dans lequel la grille conductrice est une grille de chauffage formée d'une seule pièce avec le panneau en plastique, la grille de chauffage ayant une pluralité de lignes de grille constituées d'un matériau conducteur, de telle manière que la pluralité de lignes de grille chauffent par chauffage résistif lorsqu'un courant électrique provenant d'une alimentation électrique passe à travers chacune des lignes de la pluralité de lignes de grille.
